# EUROPÄISCHE PATENTANMELDUNG

(11) **EP 0 697 787 A2**
(43) Veröffentlichungstag der Anmeldung: **21.02.1996**
(21) Anmeldenummer: 95111394.3
(22) Anmeldetag: 20.07.1995
(51) Int. Cl.: H04N 5/44, H04N 11/16

(54) **Verfahren und Schaltungsanordnung zur Darstellung eines 16:9-Fernsehbildes nach dem PAL-Plus-Verfahren auf dem Bildschirm eines Fernsehempfängers mit einer 16:9-formatigen Bildröhre**

(30) Priorität: 20.08.1994 DE 4429673; 12.11.1994 DE 4440570
(71) Anmelder: LOEWE OPTA GmbH, D-96317 Kronach (DE)
(72) Erfinder: Schmidt, Ulrich, Dr.-Ing., D-38114 Braunschweig (DE)

(57) **Zusammenfassung**

Bei einem Verfahren zur Darstellung eines 16:9-Fernsehbildes nach dem PALplus-Verfahren auf dem Bildschirm eines Fernsehempfangsgerätes mit einer 16:9-formatigen Bildröhre und ohne PALplus-Decoder, wobei in einer Zeile des vom Sender empfangenen Fernsehsignals mindestens eine Information darüber enthalten ist, daß die Übertragung nach dem PALplus-Standard erfolgt, und das Bild mit 432 Zeilen bildschirmformatfüllend dargestellt wird, ist vorgesehen, daß in Abhängigkeit von der Information eine formatfüllende Expansion des Bildes erfolgt.

## Beschreibung

Die Erfindung betrifft ein Verfahren zur Darstellung eines 16:9-Fernsehbildes nach dem PALplus-Verfahren mit dem im Oberbegriff des Anspruchs 1 angegebenen Merkmalen sowie eine Schaltungsanordnung zur Durchführung des Verfahrens.

Aus der DE 38 42 941 A1 ist ein Fernsehsystem mit Einrichtungen zur Anpassung von sendeseitig und empfangsseitig erzeugtem Fernsehbildformat bekannt, bei dem im Fernsehempfangsgerät mit geändertem Bildseitenverhältnis mittels eines im Videosignalprozessor angeordneten Speichers eine Zeilentransformation des Videosignals vorgenommen wird, wobei der sichtbare Teil der Zeile zeitlich komprimiert in das Wiedergaberaster eingefügt ist. In Abhängigkeit vom sendeseitig erzeugten Bildformat kann im Fernsehempfänger zusätzlich eine Umsteuerung der Wiedergabeeinrichtung in vertikaler Richtung vorgenommen werden, wobei das Wiedergaberaster in horizontaler Richtung unverändert ist. Eine Aussage darüber, daß auch ein 4:3 Bild formatfüllend auf dem Bildschirm einer 16:9-Bildröhre, die dem neuen Fernsehbildformat entspricht, dargestellt werden kann, ist der Schrift nicht zu entnehmen.

Weiterhin befassen sich mit der Formatsanpassung des neuen Bildschirmformats 16:9 unter Verwendung eines neuen Übertragungsverfahrens die US PS 4 729 012 und die EP 0 237 174 A2. Keine der Schriften enthält jedoch eine Anregung, auch ein 4:3 Fernsehbildsignal nach dem CCIR-Standard formatfüllend auf dem 16:9 Bildschirm darzustellen.

Aus der Fachzeitschrift "Fernseh- und Kino-Technik", 45. Jahrgang, Nr. 8/1991, Seiten 391 bis 397, ist der PALplus-Standard, eine vollkompatible Weiterentwicklung des PAL-Fernsehens beschrieben. Der wesentliche Unterschied gegenüber der Übertragung von Fernsehsignalen nach dem PAL-Standard mit 4:3-formatiger Darstellung besteht darin, daß das 576-zeilige PAL-Vollbild 1 durch vertikale Bandaufspaltung in einen vertikal tieffrequenten Anteil mit 432 Zeilen und einen vertikal hochfrequenten Anteil mit 144 Zeilen zerlegt wird in zwei Blöcken zu je 72 Zeilen vor bzw. nach dem vertikal tieffrequenten Bild angeordnet. Der vertikal hochfrequente Anteil wird als "Helper-Signal" bezeichnet; der vertikal niederfrequente Anteil wird als "kompatibles Bild" bezeichnet, da diese 432 Zeilen auch auf herkömmlichen PAL-Emfängern sichtbar sind. Das Helper-Signal wird nichtlinear vorverzerrt, um dessen Empfindlichkeit gegen Rauschen und ähnliche Störungen möglichst gering zu halten. Um das Helper-Signal auf herkömmlichen PAL-Empfängern als schwarze Balken wiedergeben zu können, wird es mit dem Farbträger moduliert und mit reduzierter Amplitude unterhalb des Schwarzwertes übertragen.

Um der Empfängerschaltung kenntlich zu machen, daß es sich bei dem übertragenen Fernsehsignal um ein PALplus-Signal handelt, das also in einem Bildformat 16:9 bzw. 5,33:3 übertragen wird und nicht in dem Standbildformat 4:3, wird in der 23. Zeile ein Kennsignal mit übertragen, das ein digitales Signal ist und ausgewertet werden kann. Fehlt dieses Kennsignal oder wird ein gesondertes Kennsignal für die 4:3-Kennung übertragen, so liegt dem Empfänger damit die Information vor, daß es sich um eine nach dem PAL-Standard übertragene Fernsehsendung handelt, so daß das Format im 4:3 und mit einer Zeilenzahl 576 dargestellt wird. Um nun ein PALplus-Fernsehsignal mit einem Empfänger mit einer Vertikalauflösung von 576 Zeilen darstellen zu können, benötigt der Empfänger einen Signal-Bit-Decoder, um diese Information auslesen und auswerten zu können. Darüber wird sodann der PALplus-Decoder aktiviert, der aus Helper-Signal und kompatiblem Bild wieder ein 576-zeiliges Bild mit voller Vertikalauauflösung herstellt. Sodann wird dieses PALplus-Fernsehbild formatfüllend auf einem 16:9-Bildschirm dargestellt.

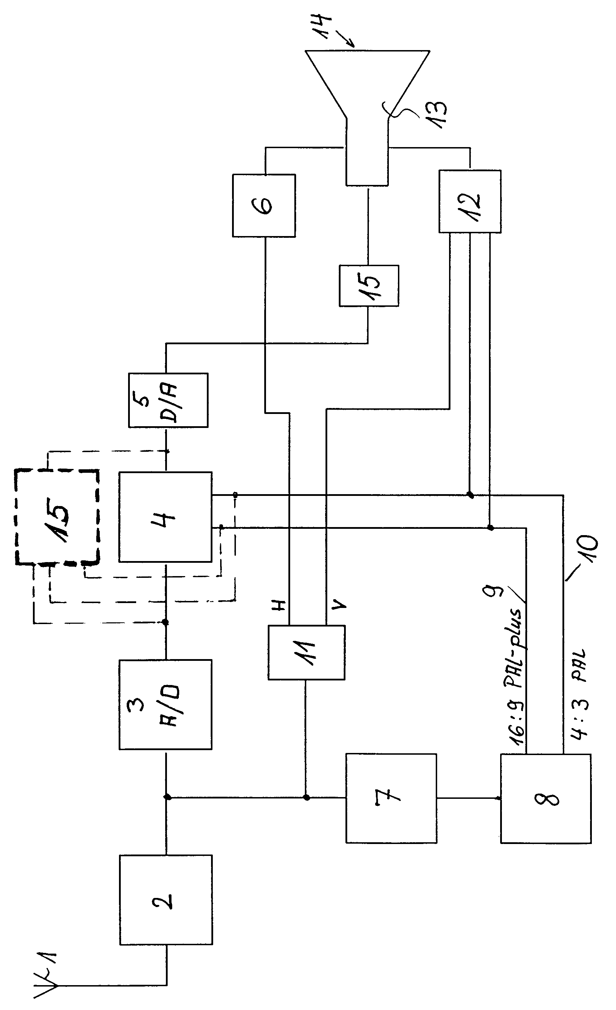

Wie aus Bild 2 der genannten Druckschrift auf Seite 393 zu entnehmen ist, führt eine Darstellung des PALplus-Bildes bei einem Gerät ohne PALplus-Decoder jedoch mit einer 16:9-formatigen Bildröhre dazu, daß die 432 Zeilen des kompatiblen Bildes im "Letterbox-Verfahren" dargestellt werden, d.h. sowohl oben als auch unten sowie links und rechts schwarze Streifen zu sehen sind. Wird hingegen ein normales PAL-Signal empfangen, d.h. mit einer Bildformatdarstellung 4:3, so sind auf dem Bildschirm rechts und links schwarze Streifen sichtbar, während die Vertikale des Bildschirms ausgeschrieben ist. Andererseits ist es gerade im Hinblick darauf, daß die Sendeanstalten in 16:9-Formaten die Sendungen aufnehmen, wünschenswert, daß die Darstellung auch in diesem Format erfolgt, und zwar möglichst in einer Darstellung, die den Bildschirm (16:9-Format) voll ausschöpft.

Der Erfindung liegt die Aufgabe zugrunde, ein Verfahren und eine Schaltungsanordnung anzugeben, die es ermöglichen, PAlplus-Bilder auf einem herkömmlichen Fernsehempfangsgerät, das keinen PALplus-Decoder aufweist jedoch eine Bildröhre mit 16:9-Seitenverhältnis, bildformatfüllend darzustellen und herkömmliche PAL-Bilder im Seitenverhältnis 4:3, den 16:9 Bildschirm ausfüllend, wiederzugeben.

Die Aufgabe löst die Erfindung durch die im Anspruch 1 angegebenen Verfahrensschritte sowie durch die im Anspruch 7 angegebenen Schaltungsanordnungen zur Durchführung des Verfahrens.

Vorteilhafte Ausgestaltungen des Verfahrens sind in den Ansprüchen 2 bis 6, die der Schaltungsanordnung im Anspruch 8 angegeben.

Ein PALplus 16:9-Fernsehbild würde, wie oben schon dargelegt, auf einem herkömmlichen Gerät mit 16:9-Bildrohr, das keinen PALplus-Decoder aufweist, die Bildröhre weder vertikal noch horizontal voll ausschreiben. Es würden an den Rändern links und rechts (side panels) sowie oben und unten Bereiche ohne Bildinhalt sichtbar sein. Das Bild wäre also gegenüber dem Breitbildformat sehr verkleinert, so daß der Betrachtungsabstand wesentlich verringert werden muß, um überhaupt noch Details des Bildes wahrnehmen zu können gegenüber einer vollformatigen Aufstellung des Bildes auf dem Bildschirm.

Durch die angegebene Auswertung von Informationsbits aus der 23. Fernsehzeile (Wide-Screen-Signalling-Bits), die selbstverständlich auch bei entsprechender Absprache in anderen Fernsehzeilen mit übertragen werden können, in denen das Format der übertragenen Sendung signalisiert wird, kann die Ablenksteuerung so eingestellt werden, daß das Bild vertikal und horizontal expandiert wird und somit die 16:9 Bildröhre ohne Formatänderung voll beschreibt.

Die in den Ansprüchen angegebenen Verfahrensschritte sowie die Schaltungsanordnungen sind selbsterklärend angegeben, so daß sich eine weitere Detaillierung erübrigt.

Die vorgesehene Auswertung der Informationsbits ermöglicht es aber auch, unter Anwendung der Verfahrensschritte mindestens zur Zeilenexpansion auch eine formatfüllende Darstellung eines 4:3-Bildes vorzunehmen. Die damit bedingten Verzerrungen der Bildelemente, die zwangsläufig breiter werden, sind in der Regel marginal und werden kaum vom Betrachter wahrgenommen, so daß auch bei einer Vertikalauflösung von 576 Zeilen eine formatfüllende Darstellung eines 4:3-Bildes auf 16:9-Format umgesetzt möglich ist. Wenn nun bei bestimmten Sendungen die Bildelementverzerrungen durch die Formatänderung als störend empfunden werden, so kann darüber hinaus ebenfalls über die vorhandenen Mittel die Vertikalamplitude durch Änderung des Vertikalablenkstrom erhöht werden, so daß obere und untere Zeilen über den Bildrand hinaus geschrieben werden, das Mittelbild aber ohne Verzerrungen der Einzelbildelemente wiedergegeben wird. Wie weiterhin vorgesehen ist, können diese Zeilen auch ausgetastet werden, so daß bei geringerer Vertikalauflösung, bei der nicht auf 432 Zeilen zurückgegangen werden muß sondern beispielsweise nur auf 500 Zeilen, ein angenehmes Bild bei gleichzeitiger Formatausfüllung der Bildröhre empfangen wird.

Durch die Erfindung ist es gewährleistet, daß eine PALplus-Sendung auch auf einem Fernsehgerät mit 16:9-Bildröhre ohne PALplus-Decoder formatfüllend dargestellt wird und somit der Nutzen des PALplus bereits bei solchen Geräten erkennbar ist. Die dabei gegebene geringere Vertikalauflösung wird nicht als störend empfunden.

Wenn hier von 432 Zeilen und 576 Zeilen die Rede ist, so soll nicht verkannt werden, daß die übrigen Zeilen nach dem Standard nicht dargestellt oder außerhalb des sichtbaren Bildbereiches geschrieben werden. Ferner sind diese Zahlenangaben an die gegenwärtige Normfestlegung gebunden. Sollten sich diese ändern, ist selbstverständlich auch eine Anpassung an die geänderten Zeilenzahlen möglich. Dies gilt auch im Hinblick auf die Übertragung der Information in der 23. Zeile, die die PALplus-Wiedergabe signalisiert. Diese kann auch in jeder anderen für digitale Fernsehtext oder VPS-Signale vorgesehenen Zeile übertragen werden.

Die Erfindung wird nachfolgend ergänzend anhand des Blockschaltbildes in der Zeichnung erläutert.

In dem Blockschaltbild wird davon ausgegangen, daß es sich um einen Fernsehempfänger handelt, der zum Empfang von PAL-Signalen des normalen Standards geeignet ist, nämlich für Bilder im Seitenformatverhältnis 4:3. Der einzige Unterschied, der gegenüber entsprechenden Fernsehgeräten besteht, liegt darin, daß anstelle einer 4:3-Bildröhre eine 16:9-Bildröhre für die Darstellung von Breitwand-Bildern vorgesehen sind. Der Fernsehempfänger kann darüber hinaus einen D2MAC-Decoder aufweisen, um nach dem D2MAC-Standard übertragene 16:9-Bilder auf dem Bilschirm darstellen zu können.

Die für die Erfindung wesentlichen Schaltungsgruppen sind in Blöcken zusammengefaßt. Der Empfänger weist einen Antennen- oder Kabeleingang 1 auf, der mit einer Empfangsschaltung 2, bestehend aus Tuner, ZF-Verstärker und Demodulator, verbunden ist. In bezug auf die Erfindung interessiert nur die Verarbeitung des Videosignals, nicht jedoch das Tonsignal. Deshalb ist dieser Kanal überhaupt nicht angegeben. Die demodulierten Videosignale werden einem A/D-Wandler 3 zugeführt, dem sich ein Zeilen-, Halbbild- oder Vollbildspeicher 4 anschließt, in den die Zeileninformationen mit einer ersten Geschwindigkeit eingeschrieben werden, die abhängig ist von der Zeilendauer des Empfangssignals. Bekanntlich beträgt die aktive Zeilendauer gemäß der Norm 52 µs. Für die normale Bildwiedergabe werden mit gleicher Geschwindigkeit die zwischengespeicherten Informationen wieder ausgelesen, einem nachgeschalteten D/A-Wandler 5 zugeführt und über die Videoendstufe an die Katoden der 16:9-formatigen Bildröhre 13 angelegt. Der Bildschirm ist mit dem Bezugszeichen 14 versehen. Das Bildsignal wird weiterhin einer Zeilenabtrennschaltung 7 zugeführt, die z.B. Bestandteil eines Teletextdecoders sein kann. Diese Schaltung ist geeignet, bestimmte Zeilen zu selektieren, um die damit übertragenen digitalen Informationen auszulesen. Eine adaptive Datenabtrennschaltung 8 sorgt dafür, daß die gewünschten Informationen über den übertragenen Standard bzw. das Bildseitenverhältnis der übertragenen Bildinformation selektiert werden. Die Auswertung erfolgt ebenfalls in der Schaltung 8. Liegt nun ein Identifikationssignal an, das signalisiert, daß die Sendung in PALplus ausgestrahlt wird, d.h. mit 432 Zeilen und Helper-Signalen, so wird ein entsprechendes Signal über die Ausgangsleitung 9 abgegeben, das bewirkt, daß die Informationen im Zeilen-, Halbbild- oder Vollbildspeicher 4 zeilenweise mit einer anderen Geschwindigkeit ausgelesen werden, so daß die Bildinformation expandiert wird. Konkret erfolgt die Auslesung in einer Zeit von ca. 64 µs gegenüber ca. 52 µs Einschreibgeschwindigkeit, so daß bei gleichbleibender Horizontalfrequenz der Ablenkung der Ablenkschaltung 6 das Bildformat des 16:9-Bildschirms in voller Horizontalbreite ausgeschrieben wird. Parallel dazu wird der Vertikalablenkstrom der Vertikalablenkschaltung 12 bei gleichbleibender Vertikalfrequenz geändert, so daß bei der Vertikalauflösung von 432 Zeilen die Vertikalamplitude des Bildschirms 14 ebenfalls voll ausgeschrieben wird. Das empfangene Bild wird also auch ohne PAL-Decoder im 16:9-Seitenverhältnis dargestellt. Die niedrigere Vertikalauflösung gegenüber mittels PALplus-Decodern dargestellten Bildern mit 576 Zeilen wird aber nicht als unangenehm empfunden. Für die Synchronisation ist eine adaptive Synchronimpulsabtrennschaltung 11 vorgesehen, die die Horizontal- und Vertikalimpulse H und V an die Ablenkschaltungen 6 und 12 abgibt, zugleich aber auch die Synchronisierschaltungen für den Speicher 4 mit steuert, was nicht gesondert eingezeichnet ist. Liegt nun ein normales PAL-Signal an, das der Darstellung des Bildes im Seitenverhältnis 4:3 entspricht, so fehlt die Information oder aber es wird eine Information mit übertragen, die diese signalisiert. So liegt am Ausgang des Informationsselektors ein Steuersignal an der Leitung 10 an, das zunächst die Darstellung des 4:3-Bildes auf dem 16:9-Bildschirm wiedergibt, wobei links und rechts schwarze Streifen vorhanden sind. Wenn dies nicht gewünscht ist, so kann die Expansionsschaltung für die Ansteuerung des Zeilenspeichers 4 ebenfalls aktiviert werden, was von der jeweiligen Ausführung des Gerätes abhängig ist, so daß eine volle horizontale Darstellung des Bildes ermöglicht wird. Um darüber hinaus damit bedingte Bildverzerrungen zu vermeiden, kann gleichzeitig auch die Vertikalamplitude des Vertikalablenkgenerators 12 verändert werden, so daß die Zeilen des 576-Zeilenbildes über den oberen und unteren Rand hinaus geschrieben werden. Diese können auch ausgetastet werden, so daß der Elektrodenstrahl über den Bildschirmrand hinaus unwirksam ist.

Eine Alternative der angegebenen Schaltungsausführung ist in der einzigen Figur ebenfalls angegeben. So kann eine Signalverarbeitungsschaltung 15 - gestrichelt eingezeichnet - mit mindestens einem Zeilenspeicher vorgesehen sein, in der das digitalisierte Signal für die 4:3-Darstellung auf einem 16:9-Bildschirm komprimiert wird. Dadurch ist die Darstellung im 4:3-Format ohne Geometrieverzerrungen auf dem Bildschirm der Bildröhre 13 möglich. Die geometrieverzerrungsfreie Darstellung ist bei allen Normen nach CCIR, nach dem PAL-, NTSC- oder Secam-Standard, möglich. Dabei entstehen allerdings seitlich im 16:9-Bildschirm Reststreifen, sogenannte side panels. Bei Empfang von Fernsehsignalen für eine Bilddarstellung 16:9, die jedoch im 4:3-Format übertragen werden, werden mit der Schaltung 15 die Signale in gleicher Weise komprimiert. Das bedeutet, daß auf dem Bildschirm nicht nur die seitlichen Felder unbeschrieben bleiben, sondern auch ein oberer und unterer Rand unbeschrieben bleibt, so daß quasi auf dem Bildschirm ein breiter Rand gegeben ist.

Hier greift nun, wie auch im ersten Ausführungsbeispiel, die Erfindung ein, indem abhängig von der Detektion des Formatsignals die Kompressionsschaltung im Falle des Empfangs von Videosignalen für die Darstellung im 16:9-Format ausgeschaltet wird, so daß das Bild mit der niedrigeren Zeilenzahl bildschirmformatfüllend dargestellt wird, wobei gleichzeitig der Ablenkgenerator 12 der Schaltung, wie im Beispiel 1 angegeben, so gesteuert wird, daß der Ablenkstrom das Beschreiben der Bildröhre in vertikaler Richtung über den Gesamtbildschirm ermöglicht. Dadurch ist es ebenfalls möglich, auf einfache Weise das Format des Bildschirms für die 16:9-Darstellung voll auszunutzen, auch dann, wenn die zusätzlichen Zeileninformationen nicht mit ausgewertet werden. Zweckmäßigerweise wird für die Signalverarbeitungsschaltung 15 ein von der Firma ITT Semiconductors Group, Intermetall, Hans-Bunte-Straße 19, 79108 Freiburg, angebotener Formatprozessor DTI 2250 bzw. 2251 oder 2216 eingesetzt, der für diese Darstellungsart bestens geeignet ist.

Es ist somit aufgezeigt, daß auch mit einem Fernsehgerät unter Verwendung einer herkömmlichen Schaltung zur Ansteuerung einer 16:9-Bildröhre Fernsehbilder, z.B. in der neuen Fernsehnorm PALplus, dargestellt werden können, ohne daß ein PALplus-Decoder hierfür notwendig ist. Hierin liegt ein bedeutender wirtschaftlicher Vorteil, da das volle Format dargestellt wird, ohne daß Informationen verlorengehen. Lediglich die hochfrequenten Bildanteile werden nicht zur Anzeige gebracht, was aber, wie eingangs schon ausgeführt, bei entsprechender Betrachtungsweite subjektiv nicht merklich wahrgenommen wird.

## Patentansprüche

1. Verfahren zur Darstellung eines Fernsehbildes nach dem CCIR-Standard auf dem Bildschirm eines Fernsehempfangsgerätes mit einer 16:9-formatigen Bildröhre, wobei in einer Zeile des vom Sender empfangenen Fernsehsignals mindestens eine Information darüber enthalten ist, wenn das Bild mit einer bestimmten niedrigeren Zeilenzahl und/oder für die 16:9-Darstellung übertragen wird, und die Information von einer der Empfängerschaltung (2) nachgeschalteten Datenabtrennschaltung (7) selektiert und in einer Auswerteschaltung (8) ausgewertet wird, und
- im Falle der Identifikation der Information als eine den Bildern mit der bestimmten niedrigeren aktiven Zeilenzahl zugehörige, der Vertikalablenkstrom im Vertikalablenkgenerator (12) von einem Normalwert auf einen solchen erhöht wird, daß bei gleichbleibender Vertikalfrequenz der Bildschirm (14) in vertikaler Richtung voll ausgefüllt wird,
- im Falle des Vorhandenseins einer Zeilenkompression diese unterdrückt wird, so daß die Videoinformation jeder Zeile des Bildes über die gesamte sichtbare Bildschirmbreite bei gleichbleibender Horizontalfrequenz dargestellt wird,
- im Falle des Empfangs eines 16:9-formatigen Bildsignales im 4:3-Format die Zeilenkompressionsschaltung wirksam geschaltet wird, wenn keine bildschirmformatfüllende Darstellung ohne Geometrieverzerrungen gewünscht ist, und
für die Darstellung eines im Standard-PAL-Format 4:3 empfangenen Bildsignals im Falle der Identifikation der Information einer Standard-PAL-Sendung eine Zeilenexpansionsschaltung aktiviert wird, die die Videoinformation über die gesamte Bildbreite bei gleichbleibender Horizontalfrequenz darstellt.

2. Verfahren nach Anspruch 1, dadurch gekennzeichnet, daß zur unverzerrten Darstellung eines 4:3 Pal-Standardformatbildes mehrere Zeilen im Verhältnis der Zeilenexpansion über den oberen und unteren Rand des dargestellten Bildes über den Rand des Bildschirms hinaus geschrieben oder ausgetastet werden.

3. Verfahren nach Anspruch 1, dadurch gekennzeichnet, daß anstelle einer Zeilenkompressionsschaltung eine Zeilenexpansionsschaltung vorgesehen ist und diese aktiviert wird, wenn die Videoinformation in jeder Zeile des Bildes über die gesamte sichtbare Bildschirmbreite bei gleichbleibender Horizontalfrequenz dargestellt werden soll.

4. Verfahren nach Anspruch 1, 2 oder 3, gekennzeichnet durch die Anwendung in einem Fernsehempfänger für die Wiedergabe eines nach dem PAlplus-Standard übertragenen Bildes mit 432 Zeilen und Helper-Signalen ohne Verwendung eines PALplus-Decoders bei bildschirmfüllender Wiedergabe.

5. Verfahren nach einem der Ansprüche 1, 2 oder 3, dadurch gekennzeichnet, daß die Videoinformation digitalisiert und in einen Zeilen-, Halbbild- oder Vollbildspeicher mit einer ersten mit den empfangenen Synchronsignalen synchronisierten Geschwindigkeit eingeschrieben und mit einer anderen Geschwindigkeit ausgelesen wird.

6. Verfahren nach Anspruch 1, dadurch gekennzeichnet, daß die Zeilenexpansion durch Umrechnen (Interpolation) der Bildpunktfolge in eine neue Bildpunktfolge, die der gedehnten Zeile entsprich, und bei gleichbleibender Geschwindigkeit des Elektrodenstrahl auf der Bildröhre erfolgt.

7. Schaltungsanordnung zur Durchführung des Verfahrens nach Anspruch 1, dadurch gekennzeichnet, daß dem Demodulator der Empfängerschaltung (2) eine Zeilenabtrennschaltung (7) nachgeschaltet ist, die mindestens die Zeile selektiert, in der die Information enthalten ist, die die Übertragung der Videoinformation im PALplus-Standard angibt, daß der Zeilenabtrennschaltung eine Informationsselektionsschaltung (8) nachgeschaltet ist, die die Information auswertet, daß im Falle des Anliegens der Information ein Steuersignal mit einem abweichenden Wert von jenem Steuersignal erzeugt wird, das anliegt, wenn keine Information oder eine Information über die Darstellung eines Bildes im 4:3-Format empfangen wird, und daß die Informationen einen Umschalter in der Vertikalablenkschaltung umschalten, wobei bei PALplus-Darstellung ein höherer Ablenkstrom eingeschaltet wird, und daß eine Zeilenexpansionsschaltung auf eine niedrige Auslesegeschwindigkeit von in einem Zeilen-, Halbbild- oder Vollbildspeicher eingeschriebenen Informationen umschaltet, und daß Videoendstufen der Schaltung die ausgelesenen Videoinformationen verstärken und diese auf dem 16:9-Bildschirm des Fernsehempfängers formatfüllend dargestellt werden, wobei eine Austastschaltung die durch die Änderung der Vertikalamplitude über den oberen und unteren Bildrand hinaus geschriebenen Zeilen austastet.

8. Schaltungsanordnung nach Anspruch 7, dadurch gekennzeichnet, daß die demodulierten Videosignale in einem A/D-Wandler digitalisiert und in einem Bildspeicher (Voll- oder Halbbildspeicher) abgespeichert sind und in einem Digitalanalogwandler in analoge Signale umgesetzt werden.
